# EUROPEAN PATENT APPLICATION

(11) **EP 1 245 793 A1**
(43) Date of publication of application: **02.10.2002**
(21) Application number: 02251196.8
(22) Date of filing: 21.02.2002
(51) Int. Cl.: F01D 25/18, F04D 29/08, F16J 15/54

(54) **Oil slinger for a turbocharger**

(30) Priority: 30.03.2001 GB 0108119
(71) Applicant: HOLSET ENGINEERING COMPANY LIMITED, Huddersfield, HD1 6RA (GB)
(72) Inventor: McEwen, James, Holset Engineering Co. Limited, Huddersfield HD1 6RA (GB)
(74) Representative: Holmes, Matthew Peter

(57) **Abstract**

Oil slinger for incorporation in a system for sealing the passage o f a rotating shaft (3) through an opening. The oil control device comprises an annular member (10) for rotation with said shaft (3) and provided with a circumferentially spaced array of passages (24,18) for centrifugally displacing fluid away from said shaft (3) as it rotates. The passages (24,18) comprise channels which are open along their length.

## Description

The present invention relates to an oil control device. The invention provides an oil control device particularly suitable for incorporation in a system for sealing the passage of a rotational shaft through a wall separating adjacent chambers subject to differential fluid pressures. Particularly, but not exclusively, the invention relates to an oil control device for incorporation in the thrust bearing sealing system of a compressor, such as a turbocharger compressor.

Turbochargers are well known devices for supplying air to the intake of an internal combustion engine at pressures above atmospheric (boost pressures). A conventional turbocharger essentially comprises an exhaust gas driven turbine wheel mounted on a rotatable shaft within a turbine housing. Rotation of the turbine wheel rotates a compressor wheel mounted on the other end of the shaft within a compressor housing. The compressor wheel delivers compressed air to the intake manifold of the engine, thereby increasing engine power.

The turbocharger shaft is conventionally supported by journal and thrust bearings, including appropriate lubricating systems, located within a central bearing housing connected between the turbine and compressor wheel housings. It is well known that providing an effective sealing system to prevent oil leakage from the central bearing housing into the compressor or turbine housing is problematical. This is particularly the case at the compressor end of the turbocharger since at low boost pressures there can be a significant drop in pressure from the bearing housing to the compressor housing which encourages oil leakage into the compressor housing.

In a conventional turbocharger design, the shaft passes from the bearing housing to the compressor housing through an appropriate passage in a compressor housing back plate, or oil seal plate, with a thrust bearing assembly located adjacent the plate within the bearing housing. It is oil supplied to the thrust bearing assembly which can leak into the compressor housing. To combat this, it is conventional to incorporate in such thrust bearing assemblies a seal assembly including an oil control device (often referred to within the turbocharger industry as an "oil slinger"). An oil slinger is an annular component which rotates with the shaft and comprises a number of radially extending passages which effectively act as vanes for slinging oil away from the shaft and in particular away from the passage from the bearing housing into the compressor housing. An annular splash chamber located around the thrust bearing and sealing assembly collects the oil for re-circulation within the lubrication system. For instance the splash chamber may be provided with drainage channels to drain oil to a sump.

Many such thrust bearing sealing systems are known, for instance an example of a typical system is disclosed in US patent number 4,157,834. In this particular system the oil slinger component is integral with a thrust collar component of the thrust bearing assembly. In other arrangements the oil slinger may be a discrete component suitably mounted for rotation with the shaft. The present invention relates to the configuration of an oil slinger which may be either a discrete component or an intregal part of another component such as a part of a thrust bearing and/or sealing assembly.

It is an object of the present invention to provide an oil slinger which is simpler, and hence cheaper, to manufacture than conventional designs. A further object is to provide an oil slinger with improved pumping efficiency compared with conventional designs.

According to a first aspect of the present invention there is provided an oil slinger for incorporation in a system for sealing the passage of a rotating shaft through an opening, the oil slinger comprising an annular member for rotation with said shaft and provided with a circumferentially spaced array of passages for centrifugally displacing fluid away from said shaft as it rotates, wherein said passages comprise channels which are open along their length.

As is discussed further below, forming the oil slinging passages as open channels provides a number of benefits over conventional designs in which the oil slinging passages are radial holes drilled into the oil slinger. Manufacture of the oil slinger is simplified as a number of known techniques can be used, such as sintering or injection moulding, which are more efficient than the machining required to manufacture conventional oil slingers. In addition to reducing the cost of manufacture, the manufacturing ease enables the configuration of the passages to be varied so that the pumping characteristic of the oil slinger can be "tuned". Open channels are also subject to lower stresses than drilled holes and accordingly durability of the oil slinger may be increased.

Preferably the annular member defines at least one generally radially extending face in which a plurality of said channels are formed.

In a preferred embodiment the annular member comprises a central cylindrical body portion and a surrounding annular portion, wherein said at least one face is defined by the annular portion, for instance at an axial end thereof.

The annular portion preferably has an axially extending part which is radially spaced from said body portion defining an annular gap therebetween. In use the annular gap may receive a flange of an oil seal plate or the like which defines said openings. In this embodiment at least some of said channels in the or each face communicate with said annular gap.

The channels may have a variety of configurations. For instance one or more of said channels may be substantially straight, and may be either radial or be swept backwards or forwards relative to the direction of rotation of the oil slinger.

Alternatively at least some of said channels may be curvilinear with either a constant or varying radius of curvature.

The channels may have a constant cross-sectional area or a cross-sectional area which increases or decreases along the length of the respective channel in a direction away from the axis rotation of the oil slinger, depending on the desired pumping characteristic. A varying cross-sectional area may for instance be provided by varying the width and/or depth of respective channels.

According to a second aspect of the present invention there is provided a seal system for sealing the passage of a rotating shaft through an opening in a wall the system comprising an oil slinger in accordance with the first aspect of the present invention mounted for rotation with said shaft.

For instance the invention provides a sealing system for sealing passage of a rotatable shaft through an opening in a wall from leakage of lubricant supplied to a thrust bearing assembly associated with said shaft, the system comprising an oil slinger according to the first aspect of the present invention mounted for rotation with said shaft between said wall and said thrust bearing assembly.

Although oil slingers in accordance with the present invention may have many varied applications they are particularly suitable for incorporation in the sealing systems of turbochargers. Accordingly, a third aspect of the present invention provides a turbocharger comprising a compressor housing and a bearing housing separated by a wall, a rotating shaft mounted on bearing systems housed within said bearing housing, said shaft extending through said wall from the bearing housing into the compressor housing, and an oil slinger according to the first aspect of the invention mounted to said shaft on the bearing housing side of said wall to help prevent leakage of lubricant from the bearing housing into the compressor housing.

The wall may be a compressor back plate, or separate oil seal plate, adapted for mating co-operation with the oil slinger. Preferably the oil slinger has a first generally radially extending axial end face which is in running engagement with said plate (at least some of said channels preferably being defined in said first end face), and/or a second generally radially extending axial end face which faces said thrust bearing assembly (at least some of said channels preferably being formed in said second end face).

An embodiment of the present invention will now be described, by way of example only, with reference to the accompanying drawings, in which:
Figure 1 is an axial cross-section through a turbocharger bearing housing incorporating the present invention;
Figure 2 is an enlargement of the compressor end of the bearing housing of Figure 1, showing detail of the location of an oil slinger in accordance with the present invention;
Figures 3 and 4 are perspective views showing opposite sides of the oil slinger in isolation;
Figure 5 is a perspective view showing the oil slinger of Figures 3 and 4 together with an oil seal plate shown in Figures 1 and 2; and
Figure 6 is a radial cross-section of the oil slinger/oil seal plate combination of Figure 5.

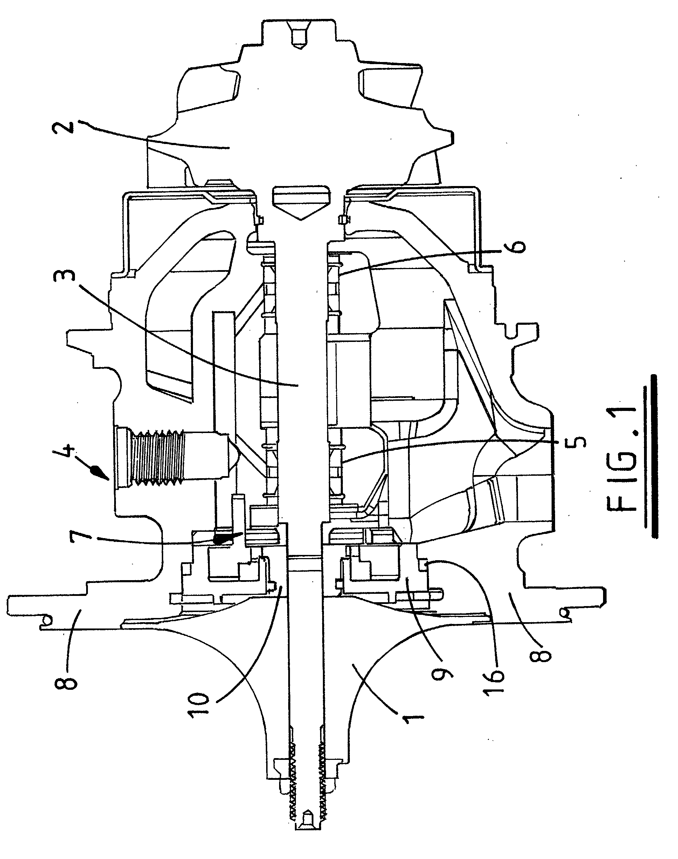

Referring to the drawings, Figure 1 is an axial cross-section through parts of a turbocharger incorporating the present invention. The illustrated turbocharger comprises a compressor wheel 1 and turbine wheel 2 mounted to opposite ends of a common shaft 3 which extends through a central bearing housing 4. Much of the detail of the bearing housing and the bearing arrangements is not important to enable the understanding or implementation of the present invention and so will not be described in depth. Such details may be entirely conventional.

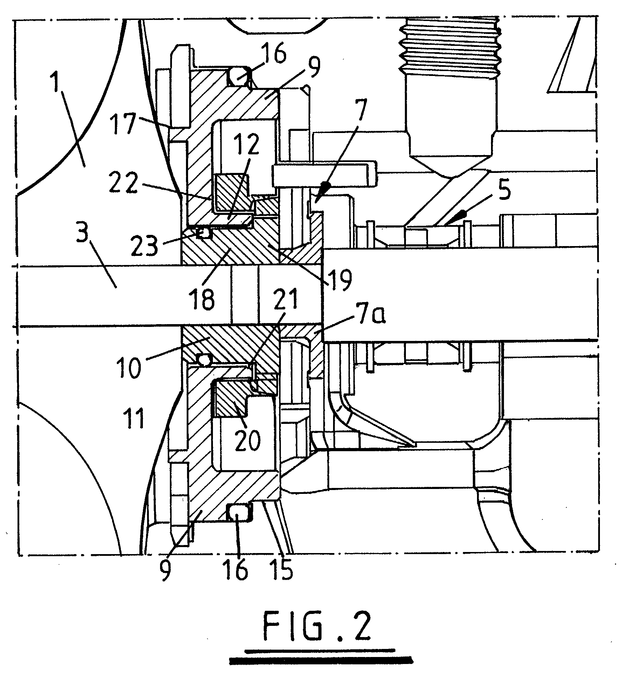

In general, the bearing housing 4 has a central portion which houses journal bearing assemblies 5 and 6 located towards the compressor and turbine ends of the bearing housing respectively. The compressor end of the bearing housing itself houses a thrust bearing assembly 7 and terminates in a radially extending diffuser section 8 which forms the diffuser portion of the compressor (a compressor cover (not shown) being bolted to the diffuser section around the compressor wheel 1). The chamber in which the compressor wheel rotates (referred to hereinafter as the compressor housing) is separated from the bearing housing by an oil seal plate 9 which sits within the diffuser section 8 of the bearing housing 4. The oil seal plate 9 is part of an oil seal system which further incorporates an oil slinger 10 in accordance with the present invention. Further details of these components will now be described with particular reference to Figures 2 to 6.

The oil seal system comprising the oil seal plate 9 and oil slinger 10 separates the compressor housing from the bearing housing and sits between the compressor wheel 1 and the thrust bearing assembly 7. The oil seal system is provided to prevent oil which must be supplied to the thrust bearing assembly 7 from leaking into the compressor housing, particular at low compressor speeds at which there will be a pressure drop from the bearing housing to the compressor housing.

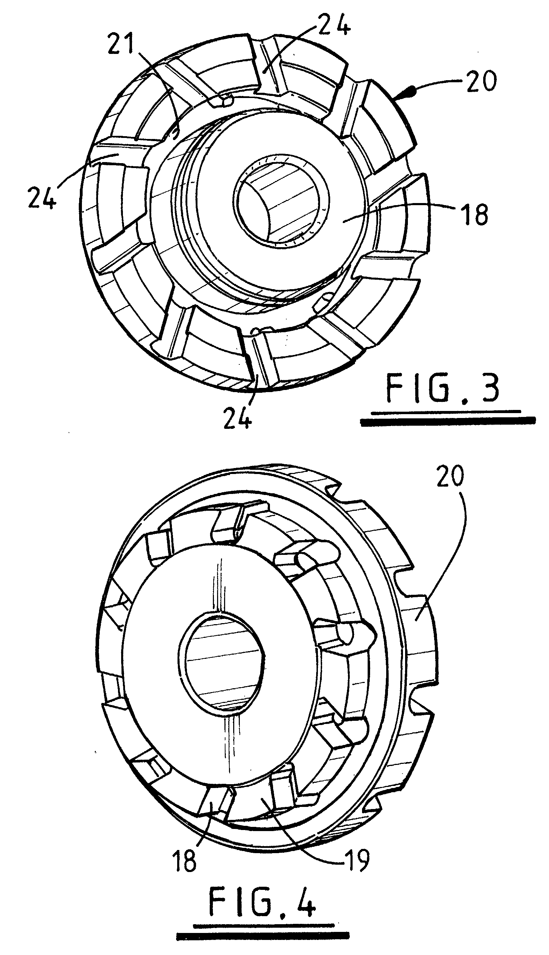

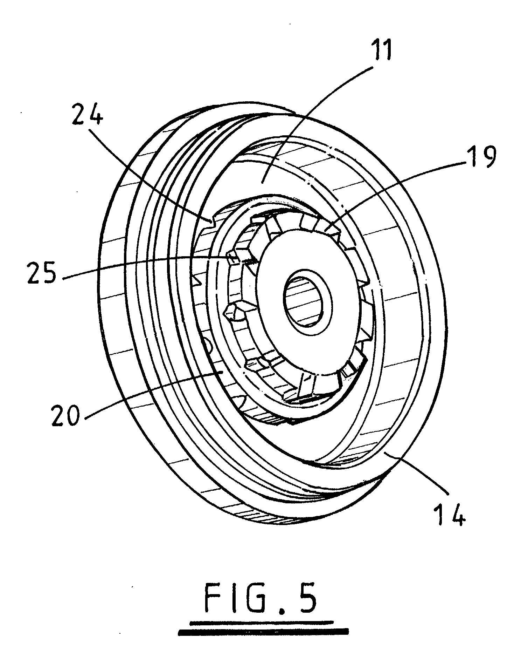

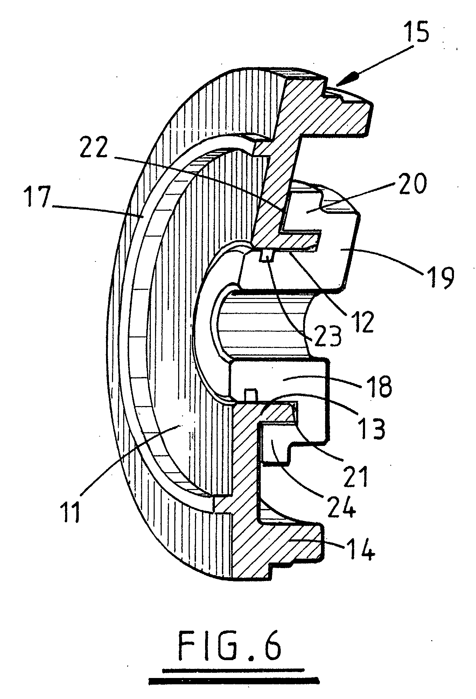

The oil seal plate is fixed in position within the housing whereas the oil slinger 10 is mounted for rotation with the shaft 3, and thus rotates relative to the oil seal plate 9. The oil slinger 10 and oil seal plate 9 mate together in a generally conventional configuration to provide a labyrinthine passage from the bearing housing to the compressor housing to protect against oil leakage. Details of the oil seal plate 9 and oil slinger 10, and the co-operation between the two, will now be described with additional reference to Figures 3 to 6. Figures 3 and 4 are perspective views of the oil slinger 10 (not to scale with Figure 1 or Figure 2) looking in opposite axial directions. Figures 5 and 6 show the oil slinger 10 and oil seal plate 9 mated together, Figure 6 being a radial cross-section of the view shown in Figure 5.

From the drawings it will be seen that the oil seal plate comprises an annular disc 11 having a central aperture 12 defined by an axially extending annular flange 13 which extends into the bearing housing 4. The flange 13 surrounds the shaft 3 but with an annular gap therebetween.

The oil seal plate 9 has a second annular flange 14 extending axially into the bearing housing 4 from adjacent its outer periphery. The second flange 14 has both a greater axial and radial dimension than the first flange 13 and bears against the thrust bearing assembly 7. An annular shoulder 15 is defined between the flange 14 and outer periphery of the disc 11 and provides an annular seat for an O-ring 16 which provides a seal between the radially outer extent of the oil seal plate 9 and the bearing housing 4. A third annular flange 17 extends radially from the compressor side of the oil seal plate 9 approximately midway between the central aperture 12 and the outer periphery of the disc 11.

Turning now to the oil slinger 10 in accordance with an embodiment of the present invention, this comprises a central cylindrical body 18 and a radially stepped annular portion which essentially comprises a radially extending flange portion 19 and a radially enlarged axially extending portion 20. The enlarged portion 20 surrounds part of the body 18 adjacent the flange portion 19 thereby defining an annular slot 21 which receives the annular flange 12 of the oil seal plate 9 such that the body 18 of the oil slinger 10 extends into the central aperture 12 of the oil seal plate 9. The radial surface 22 of the enlarged portion 20 of the oil slinger 10 is radially stepped providing an axially raised portion which lies in running engagement with the surface of the disc 11 of the oil seal plate 9 around the flange 12. An annular groove 22 is provided in the external surface of the body 18 of the oil slinger 10 within which sits an sealing ring 23 which provides a seal between the oil slinger 10 and the flange 12 of the oil seal plate 9.

The oil slinging function is provided by two axially spaced circumferential arrays of oil slinging passages defined by open channels formed in opposing end faces of the annular portion of the oil slinger 10. A first set of oil slinging channels 24 is provided in the axial end face 22 of the enlarged portion 20 of the annular portion of the oil slinger 10, extending between respective openings in the radially inner and outer surfaces of the enlarged portion 20. In the illustrated embodiment there are ten channels 24 circumferentially spaced around the enlarged portion 20. The channels 24 do not extend exactly radially, but in this case are swept forward at a slight angle.

The second set of oil slinging passages comprises channels 25 formed in the flange portion 19 of the oil slinger 10, each extending between a respective opening in the outer surface of the flange portion 19 and an opening into the annular slot 21. Again in this embodiment there are ten channels 25 which are swept forward at a slight angle.

In operation the oil slinger 10 seals the passage of the shaft 3 from the bearing housing 4 into the compressor housing. The central cylindrical body 18 of the oil slinger extends between the compressor wheel 1 and a thrust collar 7a which is a part of the thrust bearing assembly 7. As mentioned above, the raised portion of the face 22 of the enlarged portion of the oil slinger 10 is in running engagement with the oil seal plate 9. The channels 24 thus sweep across the surface of the disc 11 of the oil seal plate 9. Similarly, the channels 25 formed in the opposing face of the annular portion 19 of the oil slinger 10 sweep across a surface of the thrust bearing 7. Rotation of the oil slinger channels 24, 25 creates a positive pressure difference across the oil seal plate so that any oil which might tend to leak between the oil seal plate 9 and oil slinger 10 is centrifugal accelerated by the rotation of the oil slinger channels 24, 25 and thrown into a splash chamber defined within the bearing housing (between the inner annular surface of the oil seal plate flange 14 and the outer surface of the oil slinger 10). The displaced oil then drains away for re-circulation in a conventional manner.

The basic operation of the oil slinger 10 of the present invention is essentially the same as that of prior art oil slingers. The fundamental difference between the present invention and the prior art, however, is that the oil slinging passages are formed by open channels as opposed to the radial holes provided in conventional oil slingers. By adopting an open channel configuration manufacture of the oil slinger is greatly simplified. In particular, it is possible to vary the exact configuration of the channels without difficulty whereas with conventional oil slingers in which the oil slinging passages are formed by holes drilled into the oil slinger it would be extremely difficult to deviate from a simple arrangement of exactly radially extending passages (as are found in the prior art). In contrast, with the present invention a number of features of the characteristics of the channels can be readily altered to "tune" the pumping characteristics of the oil slinger. For instance the channels can be angled relative to radial lines extending from the centre of the oil slinger as shown in the embodiment described above. The channels can thus be swept either forwards or backwards relative to the intended direction of rotation of the oil slinger. Similarly, curved channels could be employed rather than simple straight channels as illustrated.

In the illustrated embodiment the channels have parallel sides. As a further modification the sides could taper or the depth of each channel could increase or decrease along its length. It will also be appreciated that two or more of the aforementioned features could be combined and that neighbouring channels could have different configurations.

There are a number of existing manufacturing techniques that could be readily employed in the production of oil slingers in accordance with the present invention including sintering and injection moulding techniques. Such techniques are relatively low cost compared to the machining required to produce conventional oil slinger designs. Oil slingers in accordance with the present invention can therefore be manufactured more cheaply and efficiently than existing oil slinger designs.

A further advantage is that the open oil slinger channels are not subject to the same degree of stressing as the simple drilled holes of conventional oil slingers and can therefore be made more durable than conventional oil slingers.

It will be appreciated that a number of modifications can be made to the specific example described, in addition to the possible features mentioned above. For instance, channels may be provided in one rather than both of the opposing faces of the annular portion of the oil slinger, and the number of channels in the or each array may vary from the number illustrated. The oil slinger illustrated is a discrete component but could be integral with other parts of the oil seal or thrust bearing assembly. For instance, the oil slinger could be integral with the thrust bearing collar 7a. In addition, the detailed configuration of the oil slinger 10 may vary, for instance to match varying configurations of oil seal plate 9. Furthermore, in different turbocharger arrangements the oil slinger 10 may co-operate with a backplate of the compressor housing rather than with a separate oil seal plate as in the illustrated embodiment.

Other possible modifications will be readily apparent to the appropriately skilled person.

## Claims

1. An oil control device for incorporation in a system for sealing the passage of a rotating shaft through an opening, the oil control device comprising an annular member for rotation with said shaft and provided with a circumferentially spaced array of passages for centrifugally displacing fluid away from said shaft as it rotates, wherein said passages comprise channels which are open along their length.

2. An oil control device according to claim 1, wherein said annular member defines at least one generally radially extending face in which a plurality of said channels are formed.

3. An oil control device according to claim 2, wherein the annular member comprises a central cylindrical body portion and a surrounding annular portion, and wherein said at least one face is defined by said annular portion.

4. An oil control device according to claim 3, wherein said at least one face is defined at an axial end of said annular portion.

5. An oil control device according to claim 4, wherein said annular portion defines first and second oppositely facing axial end faces each of which is provided with an array of said channels.

6. An oil control device according to any one of claims 3 to 5, wherein said annular portion has an axially extending part which is radially spaced from said body portion defining an annular gap therebetween.

7. An oil control device according to claim 6, wherein at least some of said channels in the or each face communicate with said annular gap.

8. An oil control device according to any preceding claim, wherein one or more of said channels is/are substantially straight.

9. An oil control device according to claim 8, wherein said substantially straight channels extend radially from the axis of rotation of the shaft and oil control device.

10. An oil control device according to claim 8, wherein said straight channels are angularly off-set relative to radial lines extending from the axis of rotation of the oil control device, such that said channels are swept either forwards or backwards relative to the direction of rotation.

11. An oil control device according to any preceding claim, wherein at least some of said channels are curvilinear.

12. An oil control device according to claim 11, wherein said curvilinear channels have a constant radius of curvature.

13. An oil control device according to claim 11, wherein said curvilinear channels have a radius of curvature which increases or decreases along the length of said channels in a direction away from the centre of axis of rotation.

14. An oil control device according to any preceding claim, wherein said channels have a constant cross-sectional area.

15. An oil control device according to any one of claims 1 to 13, wherein the cross-sectional area of at least some of said channels either increases or decreases along the length of the respective channel in a direction away from the axis rotation of the oil control device.

16. An oil control device according to claim 15, wherein the width of said channels varies to give said varied cross-sectional area.

17. An oil control device according to claim 15 or 16, wherein the depth of said channels varies to give said varying cross-sectional area.

18. A seal system for sealing the passage of a rotating shaft through an opening in a wall the system comprising an oil control device in accordance with any preceding claim mounted for rotation with said shaft.

19. A sealing system for sealing passage of a rotatable shaft through an opening in a wall from leakage of lubricant supplied to a thrust bearing assembly associated with said shaft, the system comprising an oil control device according to any one of claims 1 to 17 mounted for rotation with said shaft between said wall and said thrust bearing assembly.

20. A turbocharger comprising a compressor housing and a bearing housing separated by a wall, a rotating shaft mounted on bearing systems housed within said bearing housing, said shaft extending through said wall into from the bearing housing into the compressor housing, and an oil control device according to anyone of claims 1 to 17 mounted to said shaft on the bearing housing side of said wall to help prevent leakage of lubricant from the bearing housing into the compressor housing.

21. A turbocharger according to claim 20, wherein said wall is a compressor back plate, or separate oil seal plate, adapted for mating co-operation with the oil control device.

22. A turbocharger according to claim 21, wherein said oil control device has a first generally radially extending axial end face which is in running engagement with said plate, at least some of said channels being defined in said first end face.

23. A turbocharger according to claim 21 or claim 22, wherein said oil control device has a second generally radially extending axial end face which faces said thrust bearing assembly, at least some of said channels being formed in said second end face.

24. An oil control device substantially as hereinbefore described, with reference to the accompanying drawings.

25. A seal system substantially as hereinbefore described, with reference to the accompanying drawing.

26. A turbocharger substantially as hereinbefore described, with reference to the accompanying drawings.
